# EUROPÄISCHE PATENTSCHRIFT

(11) **EP 0 535 271 B1**
(45) Veröffentlichungstag und Bekanntmachung des Hinweises auf die Patenterteilung: **31.05.1995**
(21) Anmeldenummer: 91120980.7
(22) Anmeldetag: 06.12.1991
(51) Int. Cl.: B23Q 11/10, B05B 7/04, B05B 7/06

(54) **Kühlschmiervorrichtung**
Device for cooling and lubrificating
Dispositif de refroidissement et de lubrification

(30) Priorität: 01.10.1991 DE 9112244 U
(43) Veröffentlichungstag der Anmeldung: 07.04.1993
(73) Patentinhaber: Link, Edmar, D-76228 Karlsruhe (DE)
(72) Erfinder: Link, Edmar, D-76228 Karlsruhe (DE)
(74) Vertreter: Liesegang, Roland, Dr.-Ing.

(56) Entgegenhaltungen:
- EP-A- 0 047 378
- DE-A- 2 440 153
- DE-A- 2 460 160
- DE-A- 3 743 968
- DE-C- 69 932
- DE-C- 2 940 868
- US-A- 2 926 858
- US-A- 3 253 788
- US-A- 4 778 315
- DATABASE WPIL Week 8716, Derwent Publications Ltd., London, GB; AN 87-113773

## Beschreibung

Die Erfindung betrifft eine Kühlschmiervorrichtung, insbesondere für spanabhebende Werkzeuge bei Werkzeugmaschinen.

Bei einer bekannten Kühlschmiervorrichtung (DE-OS 19 28 573) weist die Mischvorrichtung eine zentrale, mit der Flüssigkeitsleitung verbundene Flüssigkeitskammer und eine diese umgebende, mit der Gasleitung verbundene Ringkammer auf. Die Austrittsöffnung der Flüssigkeitskammer ist von einer Ringdüse der Gasleitung umgeben. Der aus der Ringdüse austretende ringförmige Gasstrahl saugt Flüssigkeit durch die Austrittsöffnung in die Umgebung und erzeugt dort einen Sprühnebel.

Es ist auch eine Kühlschmiervorrichtung bekannt (US-A-3 253 788, DE-A-19 49 315), bei der ein Fluid mittels eines Verengten Rohres in hohe Geschwindigkeit versetzt wird und Schmierflüssigkeit in einen zum Schmierort hin offenen erweiterten Bereich einer Düse saugt. Auch in diesem Fall wird die Schmierflüssigkeit vor dem Erreichen des Schmierortes in einen Sprühnebel zerstäubt.

Um ein gezieltes Kühlschmieren des Zerspanortes zu ermöglichen und das unerwünschte Einmischen von Flüssigkeitstropfen in die Umgebungsluft zu vermeiden sowie das Bilden und Abtropfen von Flüssigkeitstropfen an der Austrittsöffnung zu vermeiden, ist vorgeschlagen worden, der Ausströmöffnung eine Mischkammer vorzuschalten und Flüssigkeit und Gas unter Druck in diese Mischkammer zu speisen. Hier ist nur an eine einzige, nicht justierbar auf den Zerspanort gerichtete Mischvorrichtung gedacht (DE-C-37 43 968).

Bei einer Vorrichtung zur Kühlung bei der Herstellung von Kunststoff-Hohlprofilen ist der Einsatz eines Kapillarschlauches mit einem Innendurchmesser von 1mm zum Transport von unterkühltem Stickstoff an die zu kühlende Stelle bekannt (EP 0 047 378).

Der Erfindung liegt die Aufgabe zugrunde, die Kühlschmierung am Zerspanort noch weiter zu verbessern und dabei eine feine, auf den jeweiligen Bedarf am Schmierort genau anpaßbare Dosierung des Kühl-/Schmiermittels bei minimalem Schmiermittelverbrauch zu erzielen.

Zur Lösung dieser Aufgabe dient Anspruch 1.

Mit einer Kühlschmiervorrichtung nach der Erfindung lassen sich auch sehr kleine Flüssigkeitsmengen exakt auf die gewünschte Stelle oder Stellen am zu kühlenden oder zu schmierenden Ort aufstrahlen, wobei die geförderten Flüssigkeitsmengen bei gleichzeitigem Einsatz mehrerer Mischköpfe angepaßt an die jeweilige Kühl-/Schmieraufgabe unterschiedlich einstellbar sein können. Dies führt zu einer Kühlung/ Schmierung bisher nicht bekannter Qualität auch bei sehr kleinen zu fertigenden Teilen unter minimalem Schmiermittelverbrauch.

Bei einer Kühlschmiervorrichtung nach der Erfindung entsteht der Gas-/Flüssigkeitsstrom in einer unter Überdruck stehenden Mischkammer. Darin wird der schwache, fein eingestellte Flüssigkeitsstrom in kleine Tröpfchen aufgeteilt. Mit dem Gasstrom innig vermischt wird die Flüssigkeit aus den Mischkammern gezielt in mindestens zwei gebündelten Strahlen an den Zerspanort geblasen. Die kleinen Tröpfchen folgen der Bewegung des Gasstromes und können so aus der geraden Sicht der Austrittsöffnung des Mundstückes verdeckte Flächen erreichen und benetzen. Dies ist notwendig, weil meistens das zerspanende Werkzeug die zu kühlenden und zu schmierenden Flächen abdeckt. Gleichzeitig erzeugt das Werkzeug spanabhebend solche dem Mundstück verdeckte neue Oberflächen, die zur Kühlung und Schmierung augenblicklich nach ihrem Entstehen von der Flüssigkeit benetzt werden müssen. Dabei werden eine ausgezeichnete Kühlung und Schmierung mit kleinen Flüssigkeitsvolumina erreicht, wobei sowohl Kühlung als auch Schmierung durch die mittels zwei oder mehr Strahlen aufgrund der höheren Wärmeabfuhrkapazität und der größeren, in der Zeiteinheit an den Zerspanort gebrachten Kühlschmiermittelmenge erheblich gegenüber einer Ausführung mit nur einer Mischvorrichtung intensiviert ist.

Die Vorrichtung nach der Erfindung eignet sich z.B. auch zur innigen Vermischung von flüssigen Additiven mit Gasströmen in der Medizintechnik. Solche Gemischströme können dort beispielsweise zur Inhalation, zur Desinfektion und zur Erzeugung von schützenden und kühlenden Schichten auf Brandwunden verwendet werden.

Eine Kühlschmiervorrichtung nach der Erfindung weist die folgenden weiteren Vorteile auf.

Der Überdruck der Flüssigkeit gegenüber dem Gas (z.B. Druckluft oder Stickstoff) in der Mischkammer ermöglicht ein Vermischen beider Medien bei einem Druck, der über dem Atmosphärendruck liegt. Dadurch kann der Gemischstrahl scharf begrenzt auf die zu kühlende oder zu schmierende Fläche gerichtet werden. Bei der besonders vorteilhaften Ausgestaltung, bei der jede Mischkammer von einer mit der Gasleitung verbundenen Ringkammer verbunden ist, die in eine die Ausströmöffnung umgebende Ringdüse mündet, ist der austretende Gemischstrahl von einem gasförmigen Mantelstrahl umgeben, der den Gemischstrahl kompakt hält, weil an der Grenze zwischen Gemischstrahl und Mantelstrahl der Ringdüse geringe Geschwindigkeitsdifferenzen und somit geringe Verwirbelung herrschen. Der Mantelstrahl leitet die im Gemischstrahl enthaltenen Tröpfchen also gezielt auf die zu kühlende oder zu schmierende Fläche und verhindert die höchst unerwünschte Einmischung der Flüssigkeitströpfchen in die Umgebungsluft. Der Mantelstrahl verhindert außerdem, daß sich Flüssigkeitstropfen am Austritt der Mischkammer bilden, die herabfallen und zu Verunreinigungen führen.

Die kompakten Gemischstrahlen bieten auch die Möglichkeit, das Werkzeug zu kühlen und zu schmieren, wenn in tiefen und engen Löchern gebohrt, gerieben oder gehont wird.

Die Kühlschmiervorrichtung nach der Erfindung ist in jeder beliebigen Lage funktionsfähig. Sie muß also nicht in einer bestimmten Position zur Vertikalen montiert werden.

Die Abmessungen jeder Mischvorrichtung, enthaltend die Mischkammer und ggf. die Ringdüse, können sehr klein gehalten werden. Dies, vor allem aber die Möglichkeit, die für einen kompakten Gemischstrahl erforderliche kleine Flüssigkeitsmenge über relativ große Entfernung zur Kühl- oder Schmierstelle zu leiten, begünstigt den Einsatz der Kühlschmiervorrichtung nach der Erfindung bei automatischen Werkzeugmaschinen, die in programmierter Folge mehrere individuell zu kühlende und/oder zu schmierende Werkzeuge einsetzen, außerordentlich. Der Einsatz bei solchen Maschinen wird auch dadurch begünstigt, daß die Länge der zur Mischvorrichtung führenden Flüssigkeits- und Gasleitung relativ groß sein kann, weil durch den Überdruck der Flüssigkeit im Vorratsbehälter gegenüber dem Gas in der Mischkammer, der direkt aus dem Druckverlust des Gases in der Gasleitung folgt, die Flüssigkeit auch über größere Entfernungen gefördert werden kann.

Die einfache Koppelung der Drücke von Gas und Flüssigkeit im Vorrarsbehälter erlaubt es, die Stoffströme und die Mischungsverhältnisse auf einfache Weise mit Ventilen, beispielsweise Nadelventilen, einzustellen, ohne daß hierzu komplizierte Druckregelungen und Flüssigkeitspumpen erforderlich sind.

Die Möglichkeit, mehrere Flüssigkeitsströme in den Gasstrom einzumischen, hat den Vorteil, daß man jeweils für die Kühlung und die Schmierung besonders geeignete Flüssigkeiten getrennt zuführen kann. Man muß also keine Emulsionen anwenden, die sich entmischen und bei längerer Lagerzeit verderben können.

Die Erfindung ist im folgenden anhand schematischer Zeichnungen an einem Ausführungsbeispiel mit weiteren Einzelheiten näher erläutert. Es zeigen:
- Fig. 1: eine Gesamtdarstellung einer Kühlschmiervorrichtung nach der Erfindung einschließlich eines Vorratsbehälters für Kühlschmierflüssigkeit und des Zerspanortes mit Werkstück und Werkzeug, sowie zwei Mischvorrichtungen gemäß der Erfindung;
- Fig. 2: einen Schnitt nach der Linie II-II in Fig. 1 durch eine der beiden Mischvorrichtungen nach Fig. 1 mit weiteren Einzelheiten;
- Fig. 3 und Fig. 4: Ausführungen von Kühlschmiervorrichtungen nach der Erfindung mit zwei und drei Mischvorrichtungen nach der Erfindung, die jeweils gemäß den Figuren 1 und 2 aufgebaut sind;
- Fig. 5: einen Schnitt durch ein Trennstück zum Anschließen der Mischvorrichtung(en) gemäß Fig. 1 an einen Gas- und Flüssigkeitsbehälter;
- Fig. 6: einen Schnitt nach der Linie VI-VI in Fig. 5 durch die Flüssigkeitsabdichtung des Trennstückes nach Fig. 5 in größerem Maßstab, und
- Fig. 7: eine Schnittdarstellung durch den behälterseitigen Teil einer abgewandelten Kühlschmiervorrichtung nach der Erfindung.

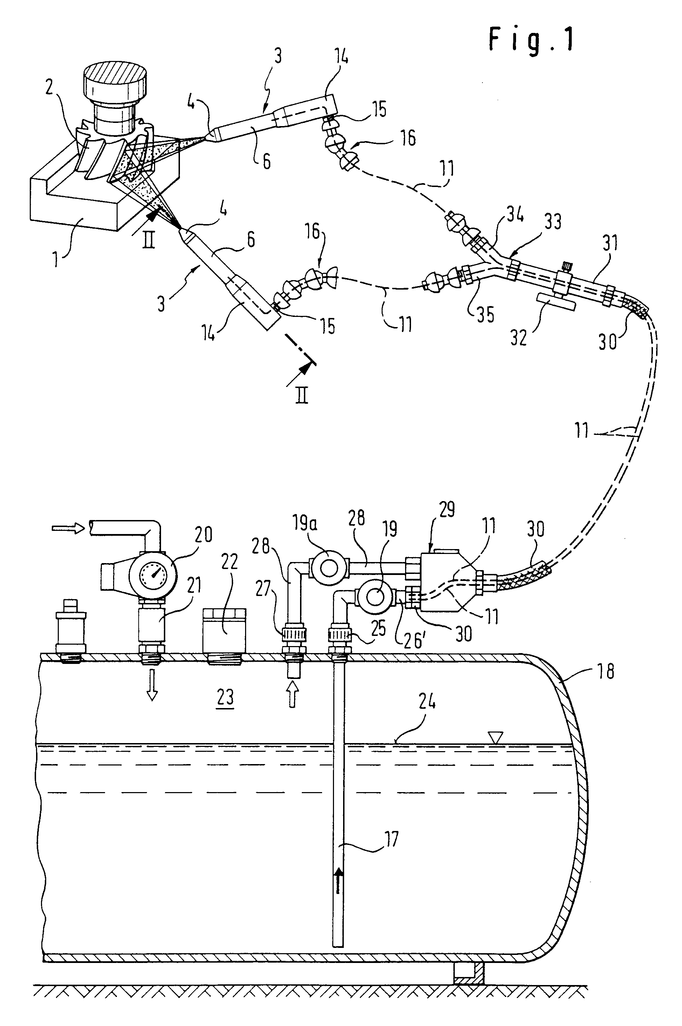

In den Figuren 1 bis 3 sind ein Werkstück aus schwer zerspanbarem Werkstoff mit der Bezugszahl 1 und ein Fräswerkzeug einer NC-Werkzeugmaschine mit der Bezugszahl 2 bezeichnet.

Ein Mischkopf 3 einer Kühlschmiervorrichtung enthält ein konisch zu einer ringförmigen Austrittsöffnung 9'verjüngtes äußeres Mundstück 4, das mit einem Ende eines Außenrohrs 6 verschraubt ist, und ein eine Mischkammer 7 bildendes Innenrohr 8, das ebenfalls konisch zu einer etwa in gleicher Ebene wie die ringförmige Austrittsöffnung 9' angeordneten, beispielsweise kreisförmigen Austrittsöffnung 5 verjüngt ist. Zwischen dem Außenrohr 6 und dem Innenrohr 8 ist eine Ringkammer 9 gebildet.

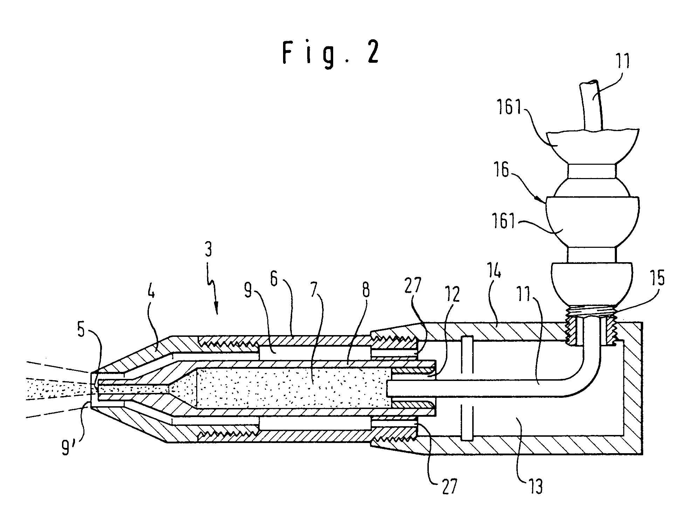

Die Mischkammer 7 kommuniziert über eine in Fig. 2 detailliert dargestellte Ringdüse 10 mit einer flexiblen Flüssigkeitsleitung 11 in Form eines Kapillarschlauchs und über die Ringöffnung 12 der Ringdüse 10 mit einem Gasraum 13, der in einer auf das Außenrohr 6 aufgeschraubten Anschlußhülse 14 ausgebildet ist und über einen Stopfen 15 mit einer flexiblen Gasleitung 16 verbunden ist. Die Flüssigkeitsleitung 11 ist durch die Gasleitung 16 und durch den Stopfen 15 hindurch unmittelbar in die Ringdüse 10 geführt. Somit kann sich über die Gasleitung 16 in den Gasraum 13 und von dort über die Bohrung 12 in die Mischkammer 7 unter Druck eingeführtes Gas mit der unmittelbar über die Flüssigkeitsleitung 11 durch die Ringdüse 10 hindurch in die Mischkammer 7 eingespeisten Flüssigkeit vermischen. Der Gasraum 13 steht über die Bohrung 27 zusätzlich mit der Ringkammer 9 in Verbindung, die somit mit Druckgas versorgt wird.

Die flexible Gasleitung 16 enthält in ihrem inneren Hohlraum lose den ebenfalls flexiblen Kapillarschlauch 11 für den Flüssigkeitstransport. Die so gebildete Schlauchanordnung 11,16 ist insgesamt derart flexibel, daß sie durch Biegen in gewünschte eigenstabile Stellungen gebracht werden kann, um die Mischköpfe 3 in gewünschte Abstände und gewünschte Winkelpositionen bezüglich des Zerspanortes zu bringen.

Die flexible Gasleitung 16 kann, wie in Fig. 1 bis 4 gezeigt, aus teilkugelförmigen, starren Elementen 161 aus Kunststoff bestehen, die gelenkig und gegeneinander gasdicht miteinander verbunden sind und einen hohlen Durchlaß für den flexiblen Kapillarschlauch 11 für den Flüssigkeitstransport bilden. Das Gas strömt in dem verbleibenden gasdichten Hohlraum in den Elementen 161. Stattdessen kann auch ein flexibles Rohr, z. B. aus Kupfer oder Stahl, als Gasleitung verwendet sein, das sich in eigenstabile gewünschte Form verbiegen läßt und ebenfalls den flexiblen Kapillarschlauch 11 für den Flüssigkeitstransport enthält.

Der Kapillarschlauch 11 besteht bei der gezeigten Ausführung aus Kunststoff, vorzugsweise PTFE (Polytetrafluorethylen, Handelsname: Teflon). Er kann reproduzierbar mit sehr kleinen Durchmessern ausgeführt werden, so daß eine feine Flüssigkeitsdosierung reproduzierbar bewirkt werden kann. Es sind beispielsweise Innendurchmesser des Kapillarschlauches von 0,3; 0,35; 0,45; 0,7 und 1,0 mm mit hoher Genauigkeit realisierbar. Damit lassen sich Förderleistungen bis herab zu 5 ml/h (Milliliter je Stunde) realisieren, d. h. sehr kleine dosierte Flüssigkeitsmengen, wie sie bisher mit herkömmlichen Nadelventilen nicht realisiert werden konnten - die minimalen Mengen lagen bei 60ml/h. Dies führt zu sehr kleinen Flüssigkeitsverbräuchen, die aus Gründen der Umweltschonung und (hohen) Kosten der eingesetzten Flüssigkeiten (Öle auf pflanzlicher Basis) höchst erwünscht sind.

Ein Flüssigkeitsbehälter 18 ist über eine Füllschraube 22 mit Rückflußverhinderer mit Kühl-/Schmierflüssigkeit befüllbar. Die Flüssigkeit wird über ein Steigrohr 17 vom Boden des Flüssigkeitsbehälters 18 her über ein Nadelventil 19 herausgeführt, mittels welchem der Flüssigkeitsstrom regelbar ist. Dabei steht die Flüssigkeit unter dem Druck des Gases (Luft), das von einer Druckquelle mit einem üblichen Speisedruck zwischen 1 und 8 bar über ein Druckminderventil 20, welches eine feinfühlige Druckregelung gestattet, und ein 3/2-Wegeventil 21, welches handbetätigt oder als Magnetventil oder als pneumatisches Ventil ausgeführt sein kann, in einen Gasraum 23 oberhalb des Flüssigkeitsspiegels 24 der Flüssigkeit im Vorratsbehälter 18 unter einen Druck zwischen 0,5 bis 7 bar eingeleitet wird.

Die Flüssigkeit gelangt zu dem Nadelventil 19 über eine gasdichte Steckkupplung 25 bekannter Bauart und einen Rohrkrümmer 26.

Gas (Luft) wird aus dem Gasraum 23 über eine weitere gasdichte Steckkupplung 27 und einen Rohrkrümmer 28 abgeführt, in den ein Nadelventil 19a zur Regelung der Gasmenge eingebaut ist.

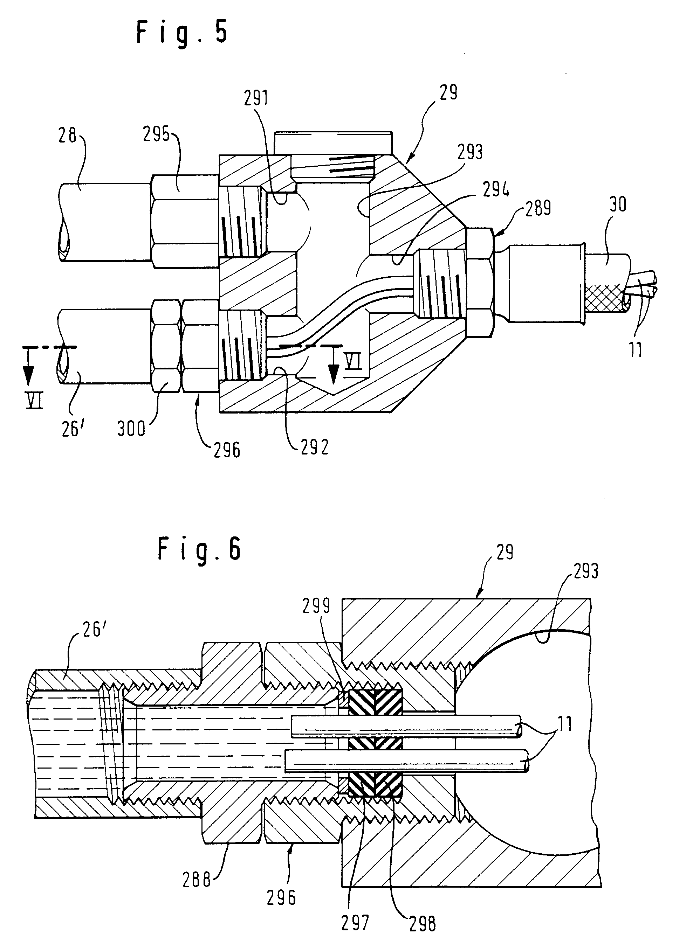

Gas und Flüssigkeit werden in ein Trennstück 29 eingespeist, das in den Figuren 5 und 6 detailliert dargestellt ist. Das Trennstück 29 hat zwei Einlaßbohrungen 291 und 292, die durch eine beidendig geschlossene Querbohrung 293 verbunden sind. Von der Querbohrung 293 zweigt eine Auslaßbohrung 294 ab. Der gasführende Rohrkrümmer 26 ist über eine übliche Dichtverschraubung 295 in die eine Einlaßbohrung 291 eingeschraubt. Das flüssigkeitsführende Rohrstück 26' stromabwärts vom Nadelventil 19 ist über eine Stopfbuchsdichtung 296 mit zwei Dichtscheiben 297,298 und einer Andrückscheibe 299 in die andere Einlaßbohrung 292 eingeschraubt. Während die Andrückscheibe nur eine große Bohrung zum Durchlassen von einem oder mehreren Kapillarschläuchen 11 hat, sind die Dichtscheiben mit einer der Anzahl der Kapillarschläuche entsprechenden Anzahl von Durchgangsbohrungen, im vorliegenden Fall zwei Durchgangsbohrungen für zwei Kapillarschläuche 11,11 versehen, die mit ihren behälterseitigen, offenen Enden in eine mit Flüssigkeit gefüllte Zwischenschraube 288 hineinragen. Hierdurch wird einem Verdrillen der Kapillarschläuche aufgrund Mitdrehens der Andrückscheibe 299 beim Anziehen der Dichtverschraubung vorgebeugt. Die Kapillarschläuche sind dann über die Querbohrung 293, die Auslaßbohrung 294 und eine Dichtverschraubung 289 in eine Sammelleitung in Gestalt eines flexiblen Schlauches 30 geführt, und in diesem von dem Gas umspült, welches ebenfalls über die Auslaßbohrung 294 und die Dichtverschraubung 289 aus dem Trennstück 29 herausgeführt wird. Das Trennstück 29 gewährleistet also eine getrennte Weiterleitung von Flüssigkeit und Gas in der Sammelleitung 30, wobei in dem Trennstück 29 bereits eine Verzweigung des Flüssigkeitsstromes in die gewünschte Anzahl von Flüssigkeitszweigströmen, im vorliegenden Fall zwei Zweigströme in den beiden Kapillarschläuchen 11, erfolgt. Selbstverständlich können statt der zwei Kapillarschläuche 11 auch drei oder mehr solcher Schläuche zum Flüssigkeitstransport oder auch nur ein solcher Schlauch vorgesehen sein, je nachdem, wie viele Mischköpfe für die Schmieraufgabe erforderlich sind. (Zu jedem Mischkopf 3 gehört ein Kapillarschlauch 11).

Die Sammelleitung 30 hat eine Länge, die ausreichend ist, um Gas und Flüssigkeit getrennt voneinander in die Nähe des Kühl- und Schmierortes zu bringen, nämlich an den Arbeitsort des Fräswerkzeuges 2 der Werkzeugmaschine. Dort mündet die Sammelleitung 30 in ein starres Rohrstück 31, das mit einem Magnethalter 32 zum Halten an der Werkzeugmaschine versehen ist und mit seinem stromabwärtigen Ende mit einem Verzweigungsstück 33 mit zwei Gabelenden 34 und 35 versehen ist (Fig. 1). Über jedes Gabelende wird ein Kapillarschlauch 11 heraus und in eine oben beschriebene Schlauchanordnung 11, 16 eingeführt, die dadurch gebildet ist, daß an jedes Gabelende über eine Dichtverschraubung eine der wie oben beschriebenen beschaffenen Gasleitungen 16 angeschlossen ist.

Das Verzweigungsstück verzweigt also die Gas- und Flüssigkeitsströme zur Aufteilung auf die jeweiligen Mischköpfe 3, wobei die Flüssigkeitsstromaufteilung bereits im Trennstück 29 stattgefunden hat.

Somit werden unter Druck stehende aufgeteilte Gas- und Flüssigkeitsströme zu jedem Mundstück 4 geführt und über die Ausströmöffnung 5 in einen kegelmantelförmigen Strahl 25 zum Zerspanort geleitet. Dabei sorgt der über die ringförmige Austrittsöffnung 9' austretende, den Gemischstrahl 25 umgebende gasförmige Mantelstrahl 26 dafür, daß sich keine Flüssigkeitstropfen am Austritt der Mischkammer 7 bilden, die herabfallen und zu Verunreinigungen führen können.

Es können auch mehrere Flüssigkeitsleitungen 11 in eine Mischkammer 7 münden. Dies ermöglicht das Bilden einer Emulsion aus unterschiedlichen Flüssigkeiten erst in der Mischkammer 7, das heißt unmittelbar vor dem Zerspanort, wodurch die Notwendigkeit vermieden wird, solche oft schnell schlecht werdenden Emulsionen schon in einem gemeinsamen Vorratsbehälter 18 bereitstellen und aufbewahren zu müssen.

Die mehreren Flüssigkeitsleitungen führen dann zu jeweils gesonderten Vorratsbehältern.

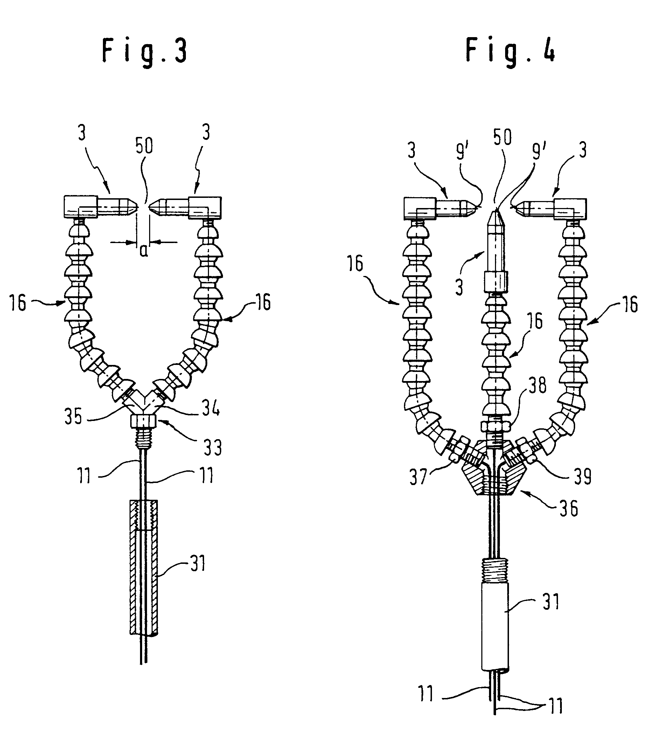

Bei der Ausführung nach Fig. 3 sind zwei Mischköpfe 3 an den Enden jeweils einer flexiblen, eigenstabil verbiegbaren Schlauchanordnung 11, 16 gezeigt, die je von einem der beiden Gabelenden 34,35 des Verzweigungsstückes 33 abzweigen. Die Mischköpfe 3 sind dabei in diametral entgegengesetzte Richtungen zueinander fluchtend mit vorbestimmtem Abstand a ausgerichtet, der zwischen den Ausströmöffnungen 9' den gewünschten Platz für den Zerspanort 50 (Angriffspunkt des Werkzeugs am Werkstück) läßt.

Bei der Ausführung nach Fig. 4 zweigen drei Mischköpfe von einem Verzweigungsstück 36 mit drei Anschlußöffnungen ab, die über Schraubstopfen 37,38,39 mit den entsprechenden Gas-/ und Flüssigkeitszweigen in den zugehörigen Schlauchanordnungen 11,16 in Strömungsverbindung stehen.

Die beiden äußeren Mischköpfe 3 sind wie in Fig. 1 und Fig. 3 rechtwinklig zu den Enden der zugehörigen Schlauchanordnungen 11, 16 angeordnet. Das Ende des jeweils innen liegenden Kapillarschlauchs 11 muß dazu rechtwinkelig umgebogen werden. Dies hat den Vorteil, daß der Kapillarschlauch nicht leicht aus der Ringdüse 10 des Mischkopfes 3 zurückfahren und sich folglich gegenüber der äußeren Gasleitung 16 axial verlagern kann, was hinsichtlich der Güte der Vermischung unerwünscht wäre.

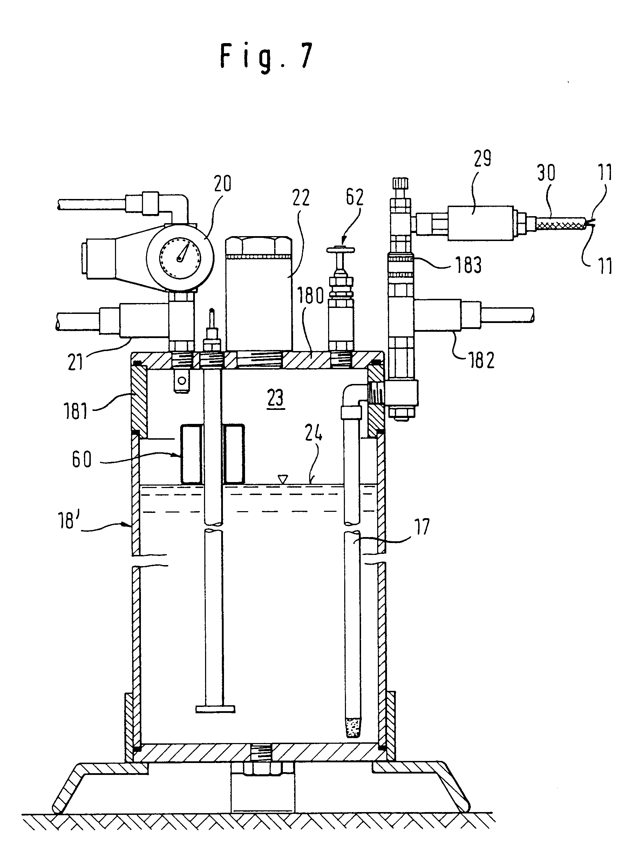

Die Ausführung nach Fig. 7 zeigt einen in der Praxis ausgeführten Flüssigkeitsbehälter 18' in zylindrischer Ausführung, mit den auch schon bei der Ausführung nach Fig. 1 vorhandenen Anbau- und Anschlußteilen, die mit gleichen Bezugszeichen wie dort bezeichnet und nicht noch einmal beschrieben sind.

Zusätzlich vorhanden sind ein Schwimmer-Füllstandsgeber 60 bekannter Bauart sowie ein Überdruckventil 62, das auf einen Abblasdruck zwischen 4 und 8 bar einstellbar ist. Die bisher genannten Anbau- und Anschlußteile sind in einem Deckel 180 des Behälters 18' montiert. Wegen der zylindrischen Form des Behälters ist jedoch der Platz beschränkt. Aus diesem Grund ist ein Anschlußring 181 dicht auf das offene Ende des zylindrischen Behälters 18' aufgesetzt, dessen oberes Ende durch den Deckel 180 abgeschlossen ist. Über diesen Anschlußring 181 wird die über das Steigrohr 17 hochgedrückte Flüssigkeit nach außen über ein 2/2-Wege Ventil 182, das als Magnetventil, als pneumatisches Ventil oder handbetätigtes Ventil ausgeführt sein kann, und eine gasdichte Steckkupplung 183 zum Trennstück 29 geführt. In gleicher Weise wird das Gas über den Anschlußring 181 aus dem Gasraum 23 heraus und dem Trennstück 29 zugeführt (nicht gezeigt).

Bei einer Anordnung mit mehreren Mischköpfen 3 lassen sich angepaßt an die Schmieraufgabe unterschiedlich groß dosierte Flüssigkeitmengen an verschiedene Stellen des Schmierortes bringen, indem einfach Kapillarschläuche 11 mit unterschiedlichen Innenweiten eingesetzt werden.

## Patentansprüche

1. Kühlschmiervorrichtung, insbesondere für den Zerspansort bei Werkzeugmaschinen, bei der ein Gas-/Flüssigkeitsgemisch auf den zu kühlenden Ort gesprüht wird, mit mindestens einen Mischkopf (3) mit je einer Ausströmöffnung (9') zum Sprühen eines Gas-/Flüssigkeits-Gemischstrahles auf den zu kühlenden Ort, einem Vorratsbehälter (18) für die Flüssigkeit, der über je eine Flüssigkeitsleitung (11) mit einer Mischkammer (7) in dem oder jedem Mischkopf (3) in Verbindung steht, und einer Druckgasquelle, die mit einem Gasraum (23) über dem Flüssigkeitsspiegel (24) im Vorratsbehälter und von dort über eine Gasleitung (16) mit der Mischkammer (7) kommuniziert, dadurch **gekennzeichnet**, daß die oder je eine Flüssigkeitsleitung (11) und die oder je eine Gasleitung (16) zur Bildung einer Schlauchanordnung (11,16) einer solchen Flexibilität zusammengefaßt sind, daß sich die zu je einem Mischkopf (3) gehörende Schlauchanordnung (11,16) individuell auf den zu kühlenden Ort ausrichten läßt, und daß die oder jede Flüssigkeitsleitung (11) von einem Kapillarschlauch aus Kunststoff mit Innenweiten im Bereich zwischen 0,1 und 2 mm, vorzugsweise zwischen 0,3 und 1 mm, gebildet ist.

2. Vorrichtung nach Anspruch 1, dadurch **gekennzeichnet**, daß jede Schlauchanordnung (11, 16) je eine flexible Flüssigkeitsleitung (11) lose innerhalb einer flexiblen Gasleitung (16) enthält.

3. Vorrichtung nach Anspruch 1 oder 2, dadurch **gekennzeichnet**, daß mindestens zwei Mischköpfe (3) vorhanden sind, die je mit einer Schlauchanordnung (11,16) verbunden sind, und daß die beiden Schlauchanordnungen mittels eines Verzweigungsstückes (33) von einer Sammelleitung (30) abgezweigt sind.

4. Vorrichtung nach Anspruch 3, dadurch **gekennzeichnet**, daß die Sammelleitung (30) ebenso viele Flüssigkeitsleitungen (11) enthält, wie Mischköpfe (3) vorhanden sind, und daß die Sammelleitung (30) den Gasstrom unaufgeteilt zu dem Verzweigungsstück (33) führt.

5. Vorrichtung nach Anspruch 3 oder 4,, dadurch **gekennzeichnet**, daß die Sammelleitung (30) von einem Trennstück (29) ausgeht, in welches unaufgeteilte Flüssigkeits- und Gasströme aus dem Vorratsbehälter (18,18') eingespeist werden, und daß die Flüssigkeit in dem Trennstück auf die Flüssigkeitsleitungen (11) aufgeteilt wird.

6. Vorrichtung nach einem der Ansprüche 1 bis 5, dadurch **gekennzeichnet**, daß der Kapillarschlauch aus PTFE-Kunststoff besteht.

7. Vorrichtung nach einem der Ansprüche 1 bis 6, dadurch **gekennzeichnet**, daß die oder jede Gasleitung (16) aus einem biegbaren, eigensteifen Schlauch aus starrem Kunststoff mit teilkugelförmigen, gegeneinander schwenkbaren Elementen besteht.

8. Vorrichtung nach einem der Ansprüche 1 bis 6, dadurch **gekennzeichnet**, daß die oder jede Gasleitung (16) aus einem Metallrohr aus einem plastisch von Hand verbiegbaren Metall besteht.

9. Vorrichtung nach einem der vorangehenden Ansprüche, dadurch **gekennzeichnet**, daß Ventile (19,20,21) zum getrennten Einstellen der unaufgeteilten Gas- und Flüssigkeitsströme vorgesehen sind.

10. Vorrichtung nach einem der Ansprüche 1 bis 9, dadurch **gekennzeichnet**, daß die flexible Flüssigkeitsleitung (11) direkt und die flexible Gasleitung (16) indirekt über einen Gasraum (13) und eine Düse (12) mit der Mischkammer (7) kommunizieren, welche von einer mit dem Gasraum (13) verbundenen Ringkammer (9) umgeben ist, die in eine die Anströmöffnung (5) der Mischkammer umgebende ringförmige Austrittsöffnung (9') mündet.

11. Vorrichtung nach Anspruch 10, dadurch **gekennzeichnet**, daß die Düse (12) als Ringdüse ausgebildet ist, welche das direkt in die Mischkammer (7) mündende Ende der Flüssigkeitsleitung (11) umgibt.

## Claims

1. A cooling-lubricating device, in particular for the machining location in machine tools in which a gas/liquid mixture is sprayed onto the place to be cooled, comprising at least one mixer head (3) with one outlet aperture (9') each for spraying a mixed gas/liquid jet at the location to be cooled, a liquid reservoir (18) for the liquid communicating with a mixing chamber (7) in the or each mixer head (3) through a liquid conduit (11) each, and a source of pressurized gas communicating with a gas space (23) above the liquid level (24) in the reservoir and from that space through a gas conduit (16) with the mixing chamber (7), characterized in that the or one liquid conduit (11) each and the or one gas conduit (16) each are combined to form a hose arrangement (11, 16) of such flexibility that the hose arrangement (11, 16) belonging to one mixer head (3) each can be directed individually at the location to be cooled and that the or each liquid conduit (11) is formed by a capillary hose of plastic having inner diameters in the range of between 0.1 and 2 mm, preferably between 0.3 and 1 mm.

2. The device as claimed in claim 1, characterized in that each hose arrangement (11, 16) includes one flexible liquid conduit (11) each, loosely inside a flexible gas conduit (16).

3. The device as claimed in claim 1 or 2, characterized in that at least two mixer heads (3) are provided which each are connected to a hose arrangement (11, 16), and in that the two hose arrangements branch off from a manifold (30) by means of a branch member (33).

4. The device as claimed in claim 3, characterized in that the manifold (30) contains just as many liquid conduits (11) as there are mixer heads (3), and that the manifold (30) guides the undivided gas stream up to the branch member (33).

5. The device as claimed in claim 3 or 4, characterized in that the manifold (30) starts from a separator member (29) into which undivided liquid and gas streams are fed from the reservoir (18, 18'), and that the liquid is divided in the separator member into the liquid conduits (11).

6. The device as claimed in any one of claims 1 to 5, characterized in that the capillary hose is made of polytetrafluoroethylene.

7. The device as claimed in any one of claims 1 to 6, characterized in that the or each gas conduit (16) consists of a bendable, inherently stiff hose made of rigid plastic comprising part-spherical, mutually pivotable elements.

8. The device as claimed in any one of claims 1 to 6, characterized in that the or each gas conduit (16) is made of a metal tube which is bendable plastically by hand.

9. The device as claimed in any one of the preceding claims, characterized in that valves (19, 20, 21) are provided for separate adjustment of the undivided flows of gas and liquid.

10. The device as claimed in any one of claims 1 to 9, characterized in that the flexible liquid conduit (11) communicates directly with a mixing chamber (7) while the flexible gas conduit (16) communicates indirectly with the same through a gas space (13) and a nozzle (12), said chamber being surrounded by a ring chamber (9) connected to the gas space (13) and said ring chamber opening into an outlet aperture (9') surrounding the inlet aperture (5) of the mixing chamber.

11. The device as claimed in claim 10, characterized in that the nozzle (12) is designed as a ring nozzle surrounding the end of the liquid conduit (11) which opens directly into the mixing chamber (7).

## Revendications

1. Dispositif de lubrification et de refroidissement, en particulier pour la zone de coupe de machines outil, dans lequel un mélange de gaz et de liquide est aspergé sur la zone à refroidir, comprenant au moins une tête de mélange (3) ayant un orifice de sortie (9') pour envoyer un jet de mélange de gaz et de liquide sur la zone à refroidir, un réservoir (18) pour le liquide qui est relié par un conduit de liquide (11) à une chambre de mélange (7) dans la tête de mélange (3), et une source de gaz sous pression qui communique avec un espace de gaz (23) au-dessus du niveau de liquide (24) dans le réservoir et de là avec la chambre de mélange (7) par un conduit de gaz (16), caractérisé en ce que le conduit de liquide (11) et le conduit de gaz (16) sont, pour former un dispositif de tuyau (11, 16), assemblés avec une flexibilité telle que le dispositif de tuyau (11, 16) du côté de la tête de mélange (3) puisse être orienté individuellement vers la zone à refroidir, et en ce que que le conduit de liquide (11) est constitué d'un tuyau capillaire en matière plastique de diamètre intérieur dans la plage entre 0,1 et 2 mm, de préférence entre 0,3 et 1 mm.

2. Dispositif selon la revendication 1, caractérisé en ce que le dispositif de tuyau (11, 16) comprend un conduit de liquide flexible (11) librement disposé à l'intérieur d'un conduit de gaz flexible (16).

3. Dispositif selon la revendication 1 ou 2, caractérisé en ce qu'il comprend au moins deux têtes de mélange (3) dont chacune est reliée à un dispositif de tuyau (11, 16), et en ce que les deux dispositifs de tuyau sont dérivés d'un conduit commun (30) à l'aide d'une pièce de dérivation (33).

4. Dispositif selon la revendication 3, caractérisé en ce que le conduit commun (30) contient autant de conduits de liquide (11) qu'il y a de têtes de mélange (3), et en ce que le conduit commun (30) mène le courant de gaz non divisé vers la pièce de dérivation (33).

5. Dispositif selon la revendication 3 ou 4, caractérisé en ce que le conduit commun (30) part d'une pièce de séparation (29), dans laquelle les écoulements non-divisés de liquide et de gaz sont fournis à partir du réservoir (18, 18'), et en ce que le liquide est réparti entre les conduits de liquide (11) dans la pièce de séparation.

6. Dispositif selon l'une quelconque des revendications 1 à 5, caractérisé en ce que le tuyau capillaire est en matière plastique PTFE.

7. Dispositif selon l'une quelconque des revendications 1 à 6, caractérisé en ce que chaque conduit de gaz (16) est constitué d'un tuyau courbable à stabilité propre en matière plastique rigide comprenant des éléments partiellement sphériques pivotant les uns par rapport aux autres.

8. Dispositif selon l'une quelconque des revendications 1 à 6, caractérisé en ce que chaque conduit de gaz (16) est un tuyau métallique en un métal plastiquement courbable à la main.

9. Dispositif selon l'une quelconque des revendications précédentes, caractérisé en ce que des vannes (19, 20, 21) sont prévues pour des réglages séparés des écoulements non divisés de gaz et de liquide.

10. Dispositif selon l' une quelconque des revendications 1 à 9, caractérisé en ce que le conduit de liquide flexible (11) communique directement avec la chambre de mélange (7) et le conduit de gaz flexible (16) communique directement avec celle-ci par l'intermédiaire d'une chambre de gaz (13) et d'une buse (12), la chambre de mélange (7) étant entourée d'une chambre annulaire (9) communiquant avec la chambre de gaz (13), qui débouche dans une ouverture de sortie (9') annulaire entourant l'orifice de sortie (5) de la chambre de mélange.

11. Dispositif selon la revendication 10, caractérisé en ce que la buse (12) est annulaire et entoure l'extrémité du conduit de liquide (11) débouchant directement dans la chambre de mélange (7).
